(19) **Europäisches Patentamt**

**European Patent Office**

**Office européen des brevets**

(11) **EP 1 202 428 B1**

(12) **EUROPEAN PATENT SPECIFICATION**

(45) Date of publication and mention
of the grant of the patent:
**01.06.2005 Bulletin 2005/22**

(51) Int Cl.⁷: **H02J 9/06**

(21) Application number: **00830718.3**

(22) Date of filing: **31.10.2000**

(54) **An emergency lighting unit, a device comprising said unit, and a control method for these**

Notlichteinheit, diese Einheit enthaltende Vorrichtung sowie Steuerungsverfahren

Bloc d'éclairage de sécurité, un dispositif comprenant ce bloc, et procédé de commande de ceux-ci

(84) Designated Contracting States:
**AT BE CH CY DE DK ES FI FR GB GR IE IT LI LU
MC NL PT SE**

(43) Date of publication of application:
**02.05.2002 Bulletin 2002/18**

(73) Proprietor: **MAGNETEK S.p.A.**
**52028 Terranuova Bracciolini (AR) (IT)**

(72) Inventors:
• **Canova, Antonio**
**52025 Montevarchi, Arezzo (IT)**
• **Martini, David**
**52028 S. Giovanni Valdarno, Arezzo (IT)**
• **Cini, Simone**
**52025 Montevarchi, Arezzo (IT)**

(74) Representative: **Mannucci, Michele et al**
**Ufficio Tecnico Ing.A. Mannucci,
Via della Scala 4
50123 Firenze (IT)**

(56) References cited:
**EP-A- 0 364 371          US-A- 3 833 817
US-A- 4 158 792          US-A- 4 988 889**

• **WELLS E.: 'Using the UC3871 and UC3872
Resonant Fluorescent Lamp Drivers in Floating
Lamp Applications' UNITRODE DESIGN NOTES
no. DN75, May 1997, pages 1 - 4**
• **JORDAN M. ET AL: 'Resonant Fluorescent Lamp
Converter Provides Efficient and Compact
Solution' PROCEEDINGS OF THE ANNUAL
APPLIED POWER ELECTRONICS
CONFERENCE (APEC-IEEE) vol. CONF 8, 07
March 1993 - 11 March 1993, SAN DIEGO, pages
424 - 431**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to emergency lighting equipment or devices of the type containing an emergency unit capable of providing an independent power supply to a lamp or fluorescent tube if the mains supply fails.

The invention relates more particularly to an emergency unit for this type of equipment or device.

The invention also relates to a method for controlling devices and emergency units of the aforesaid type.

Emergency lighting devices of the type comprising a ballast supplying at least one lamp, an emergency battery and an emergency unit are available at the present time. The emergency unit comprises a battery charger, a control circuit and an inverter for supplying the lamp in emergency conditions, in other words in the absence of electrical mains power. In emergency, the power is supplied by the battery, which is kept charged by the battery charger during normal operation.

An example of such an emergency lighting unit is disclosed in US-A-3833817. EP-A-364371 discloses an emergency unit with a special device for controlling the battery charge. Other examples of known emergency lighting units are disclosed in US-A-4988889 and US-A-4158792. Unitrode Design note XP-001051082 discloses the use of a certain family of resonant lamp drivers in floating lamp applications.

These devices must meet specific requirements established by the regulations in force in various countries, primarily relating to the reserve time of the device in emergency conditions, in other words the minimum guaranteed duration of operation in emergency conditions. When the battery capacity and the minimum reserve time of the device have been specified, the current which the battery can supply to the lamp is determined. For example, in order to guarantee a reserve time of 3 hours when a 4 Ah nickel-cadmium battery is used, the maximum discharge current, in other words the current which the battery can supply to the lamp during operation in emergency conditions, is 0.8 A. For a reserve time of 1 hour, the maximum discharge current is 2.4 A. These values also allow for the exhaustion of the batteries over time and the consequent reduction in their capacity.

The current absorbed by the lamp associated with the device depends on the power of the lamp. Conventional devices are therefore designed in such a way as to absorb the maximum permissible current (determined, as indicated above, from the capacity of the battery and the minimum reserve time to be guaranteed) when the lamp having the highest power is fitted to the device. Consequently, lamps whose power exceeds the design limit for a given device cannot be supplied by the device. Moreover, the current absorbed by the device and then supplied to the lamp in emergency conditions is not always the maximum amount determined by the life of the battery. This will be the case only for the highest-power lamp for which the device has been designed. For other lamps, the current supplied by the battery will be lower, and consequently the light flux in emergency conditions will be less than that which could be achieved while still maintaining the guaranteed minimum reserve time.

Fig. A shows schematically a self-oscillating inverter of an emergency unit of a conventional type for supplying the lamp. The letter A indicates the inverter in a general way, B indicates the two controlled switches, C indicates the control circuit of the switches B, and $V_{bat}$ indicates the battery voltage.

It is therefore necessary to provide a larger number of emergency devices to obtain the minimum level of illumination required by the regulations.

If the BLF (ballast lumen factor) is defined as

$$BLF = \frac{\text{(emergency light flux)}}{\text{(light flux in normal operation)}} \times 100$$

a given emergency device will provide the maximum possible BLF only with the highest-power lamp for which the device was designed. Lamps with a lower power will operate, in emergency conditions, with a BLF below the optimal value.

The object of the present invention is to provide an emergency lighting device and an emergency unit of the aforementioned type which do not have these disadvantages. More particularly, the object of the invention is to provide a device which optimizes the BLF for each lamp used.

These and other objects and advantages which will be made clear to a person skilled in the art by the following text, are essentially achieved with an emergency lighting unit comprising

- a connection for a battery,
- an inverter for supplying, in emergency conditions, by means of said battery, a lamp connectable to said unit,
- a circuit for controlling the current supplied by the battery to the inverter, which maintains said current at a predetermined value independently of the characteristics of the lamp connected to the inverter.

Essentially, when the current absorbed from the battery is controlled in such a way that it is kept constant when the lamp used is changed and is kept equal to the maximum permissible value according to the reserve time of the device, the emergency light flux is maximized, independently of the lamp used.

In a practical embodiment, the control circuit of the emergency unit comprises:

- a system for measuring the current supplied from the battery to the inverter (discharge current);
- means of comparison which compare the value measured by the measurement system with a value which can be selected, to generate a control signal;
- a device for regulating the current supplied from the battery to the inverter according to the control signal.

In a particularly efficient embodiment, the regulating device comprises a controlled switch, for example a MOSFET, and the control signal operates said controlled switch, causing it to open and close in such a way as to maintain the mean discharge current at the desired value. To ensure an essentially continuous current at the power supply input, means are advantageously provided to maintain a supply of current to the inverter during the intervals of opening of the controlled switch. An inductance and a diode can be used for this purpose.

The inverter for use in the emergency unit can be a push-pull inverter and more particularly an inverter of the current-sourcing push-pull parallel-resonance type.

The inverter is associated with a synchronizing circuit to generate an inverter control signal at a frequency equal to the resonant frequency of the inverter, independently of the lamp supplied by said inverter, in such a way that the inverter is switched over at zero voltage and current. To reduce the current consumption and the costs of the synchronizing circuit, this circuit can advantageously be made with a logic gates configuration which gates generate a digital synchronizing signal from a suitable input signal, for example the collector voltage of a transistor whose switching is controlled by a signal synchronized with the inverter voltage.

The synchronizing circuit can also be equipped with means which prevent the operation of the inverter when its resonant frequency departs from a preset frequency range. For this purpose, it is possible to provide two oscillators having frequencies equal to the maximum and minimum permissible for the resonant frequency of the inverter.

The synchronizing circuit can also yield advantages if it is used in other applications, for example in inverters which are not fitted in emergency units.

The invention also relates to an emergency lighting device, comprising, in combination, a connection to a power supply line, a ballast for supplying at least one discharge lamp from the voltage supplied by said line, and an emergency unit as described above.

The invention also relates to a method for supplying a discharge lamp in emergency conditions by means of an emergency battery, in which the lamp is supplied from said battery through an inverter, characterized in that the value of the current supplied by the battery is measured and the power supply conditions of said inverter are controlled by maintaining the supplied current at a mean value which is essentially equal to a maximum value which is determined by the capacity of the battery and at which the battery provides a predetermined period of operation in emergency.

Further advantageous characteristics and embodiments of the invention are indicated in the attached claims.

The advantages which are obtained with the emergency unit and with the device according to the invention are numerous. In the first place, the emergency lighting device supplies the lamp with a constant power which is independent of the model and power of the lamp used. This power is equal (if the negligible losses due to the power consumption of the device, and of the current control circuit in particular, are disregarded) to the maximum value obtainable from the battery used to guarantee the desired reserve time. This enables the BLF to be optimized for a given battery and for each lamp.

The optimization of the BLF makes it possible to specify, at the design stage, the use of a smaller number of ceiling lights fitted with the emergency unit. The gain in percentage terms of BLF for 35 W T5 lamps has been found to be, for example, more than 40% by comparison with conventional devices. Therefore, if, in a given environment, ten 35 W T5 lamps supplied by conventional emergency units are required to provide the level of illumination required by the regulations, only six units will be required if use is made of the unit according to the invention which increases the BLF by 40%.

Moreover, the emergency unit according to the invention makes it possible to use different fluorescent lamps, for example T5, T8, TC-DD, TC-D/E, TC-T/E, TC-L, TC-F, TC-S/E and T-R types, with a single type of device.

It is also possible to select the life of the battery at the time of installation, by an external setting of the jumper, switch or equivalent type. This is because, as will be made clear by the following description, the lamp supply current in emergency conditions is controlled by comparison with a reference signal. The value of this signal can be set in such a way that the device maintains the current supplied by the battery at a value which provides the desired reserve time of 1 hour or 3 hours (or another suitable value).

The invention will be more clearly understood from the description and the attached drawing, which shows a practical and non-restrictive example of the invention. In the drawing,

Fig. A is a diagram of an inverter of a conventional emergency unit;

Fig. 1 is a block diagram of the lighting device;

Fig. 2 is a block diagram of the emergency unit;

Figs. 3A and 3B are circuit diagrams of the inverter, the synchronizing circuit for the inverter control signals, and the control circuit for the battery discharge current;

Figs. 3C and 3D show details of modified embodiments of the circuit of Fig. 3D;

Fig. 4 shows the variation of the voltage at the central tap of the transformer of the power supply inverter;

Figs. 5 and 6 show the variation of the waveform in the synchronizing circuit;

Fig. 7 shows the signal at the outputs of the control flip-flop of the switches of the inverter as a function of the clock signal;

Fig. 8 shows the variation of the waveform in the current control circuit;

Fig. 9 is a circuit diagram of a battery charger;

Fig. 10 shows the variation of the charging current for a type of battery that can be used with the emergency device; and

Fig. 11 is a diagram of a circuit for recognizing the battery voltage and setting the undervoltage.

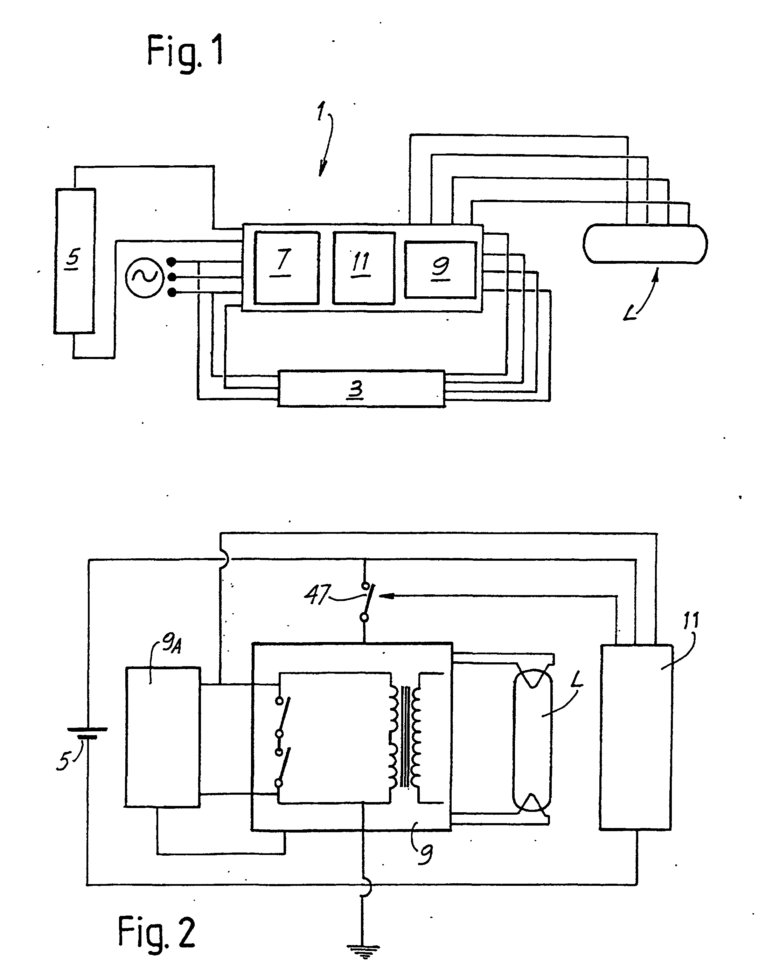

Fig. 1 shows a block diagram of the device. This comprises an emergency unit 1, a ballast 3 for supplying the fluorescent lamp L in normal supply conditions, in other words when the power is supplied from the mains, and a battery 5 for the supply in emergency conditions, connectable to the unit 1.

The switching from the mains supply to the emergency supply takes place in a known way and the corresponding parts of the circuit are not illustrated here.

The emergency unit 1 comprises a battery charger 7 capable of charging the battery 5 when the mains power is present, in other words in normal operating conditions. It also comprises an inverter 9 capable of supplying the lamp L with the power taken from the battery 5 when the mains voltage is absent, and a control circuit 11 which serves to maintain the absorbed current equal to the maximum value ($I_{max}$) compatible with the reserve time of the device in emergency operating conditions, independently of the type of lamp L connected to the inverter 9.

The power supplied by the battery in emergency operating conditions is equal to

$$P = V * I$$

where V is the voltage of the battery and I is the current supplied. Essentially, the control circuit acts in such a way that the current I supplied by the battery is always equal to $I_{max}$, in other words to the maximum current that can be supplied to achieve the guaranteed reserve time of the emergency device.

Fig. 2 shows a block diagram of the current and inverter control circuit for supplying the lamp L in emergency conditions. In this case also, the number 5 indicates the battery, 9 indicates the inverter, 9A indicates the synchronizing circuit for synchronizing the control signal of the controlled switches of the inverter and 11 indicates the current control circuit. As described in greater detail below with reference to an example of an embodiment of the circuit, the control circuit 11 measures the current supplied by the battery 5 to the inverter 9, in other words the discharge current of the battery, and generates a feedback signal which causes the opening and closing of a controlled switch 47 to maintain the mean value of the inverter power supply current equal to the maximum value $I_{max}$ at which the minimum reserve time of the battery 5 is guaranteed.

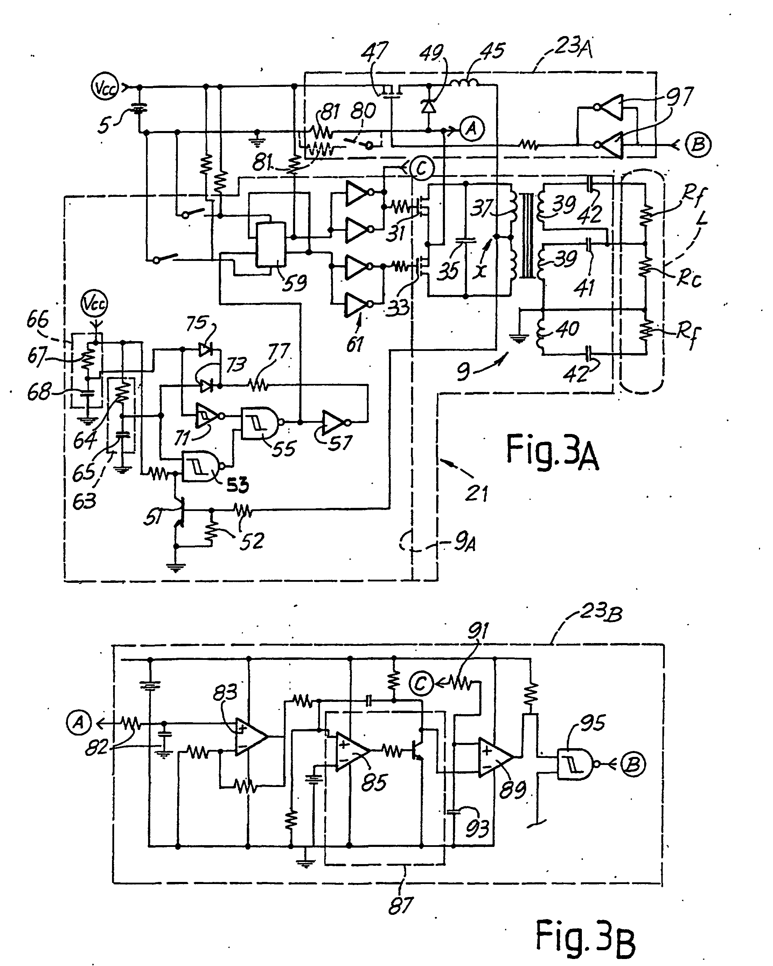

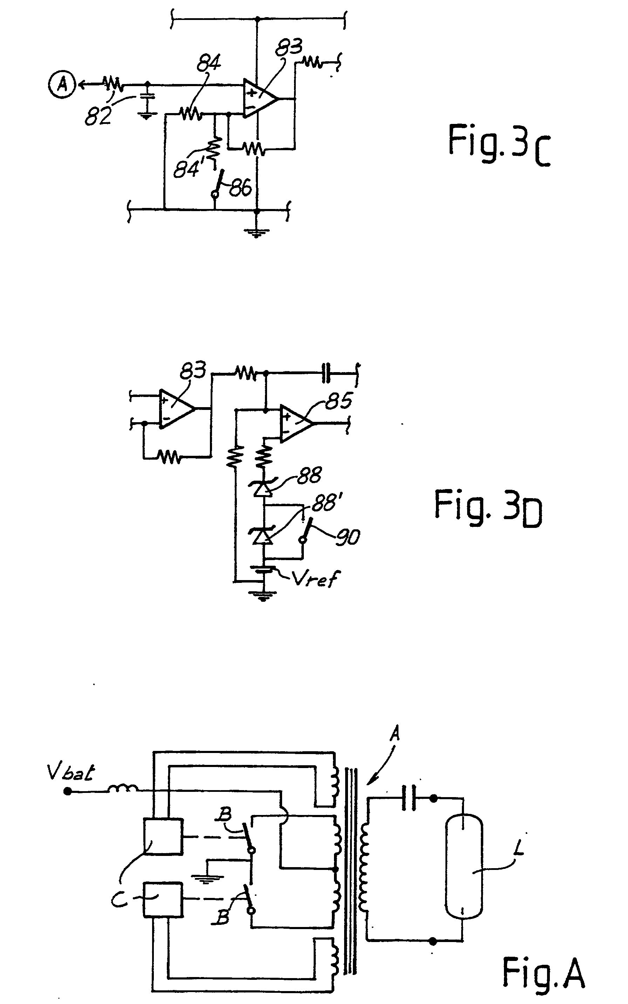

One solution in circuit form for the construction of the blocks 9, 9A and 11 is illustrated in Figs. 3A and 3B. Here, the frame of broken lines indicated by 21 encloses the components forming the inverter and the synchronization control circuit which causes the opening and closing of the controlled switches of the inverter. 23A and 23B indicate two blocks which together make up the control circuit of the supply current in emergency conditions, and L indicates the fluorescent lamp, which in this diagram is represented as a set of three resistors $R_f$, $R_f$ and $R_l$, representing the resistances of the two filaments and the internal resistance of the lamp. Here again, 5 indicates the supply battery. The letters A, B, C indicates the points of connection between the portions of circuit shown in Figs. 3A and 3B.

More particularly, the inverter comprises a pair of MOSFETs or other controlled electronic switches 31, 33 in half-bridge configuration, in parallel with which are connected a capacitor 35 and the primary winding 37 of a transformer with a central tap connected to the load circuit, the secondary of this transformer being indicated by 39. The numbers 41 and 42 indicate three capacitors of the charging circuit which also comprises the inductance 40 and the resistors $R_f$, $R_f$, $R_i$ representing the lamp L.

The inverter is connected to the battery 5 through an inductance 45. The configuration described up to this point is known and is called a current-sourcing push-pull parallel-resonance inverter (CS-PPRI).

When the mains voltage fails, the lamp L is supplied by the inverter to which energy is supplied by the battery 5 through the controlled switch 47 in series with the inductance 45. The controlled switch 47 is opened and closed by the current control circuit 23A, 23B described below, in such a way that the lamp L is supplied with a mean current equal to the maximum current $I_{max}$ which can be supplied in accordance with the conditions of minimum reserve time guaranteed for the battery with which the emergency device is fitted.

The inductance 45 is associated with a diode 49 which provides an essentially constant current to the inverter when the controlled switch 47 is open, by using the energy temporarily stored in the inductance 45. When the controlled switch 47 is open, the current flows through the diode 49, the inductance 45 and the inverter.

The inverter which has been described operates by switching the switches 31 and 33 at zero voltage and zero current if the control frequency of the switches is equal to the resonant frequency. This depends on the load applied to the inverter, in other words, ultimately, on the lamp fitted in the device. It is therefore necessary, in order to obtain switching at zero current and voltage, for the control signal of the switches 31 and 33 to be locked to the resonant frequency. The synchronizing circuit 9A is provided for this purpose.

The synchronizing circuit comprises a transistor 51 whose base is connected through a voltage divider 52 to the central tap of the transformer of the inverter 9, in other words to the point indicated by X in Fig. 2A. The collector of the transistor 51 is connected to a first input of a first NAND gate indicated by 53, whose output is connected to a first input of a second NAND gate indicated by 55. The output of the latter is connected to the input of a NOT gate indicated by 57 and to the clock input of a flip-flop of the "T" or toggle type, indicated in a general way by 59, whose two signals at the outputs Q pass through an amplification stage 61 to control the opening and closing of the two controlled switches 31, 33.

The circuit also comprises two oscillators consisting of two RC networks indicated by 63 and 66, and formed, respectively, by a resistor 64 and a capacitor 65, and by a resistor 67 and a capacitor 68. The network 63 is connected to the second input of the NAND gate 53, while the RC network 66 is connected to the input of a NOT gate indicated by 71, whose output, in turn, is connected to the second input of the NAND gate 55.

The output of the NOT gate 57 is connected to the two networks 63, 66 through two corresponding diodes 73, 75 and a resistor 77.

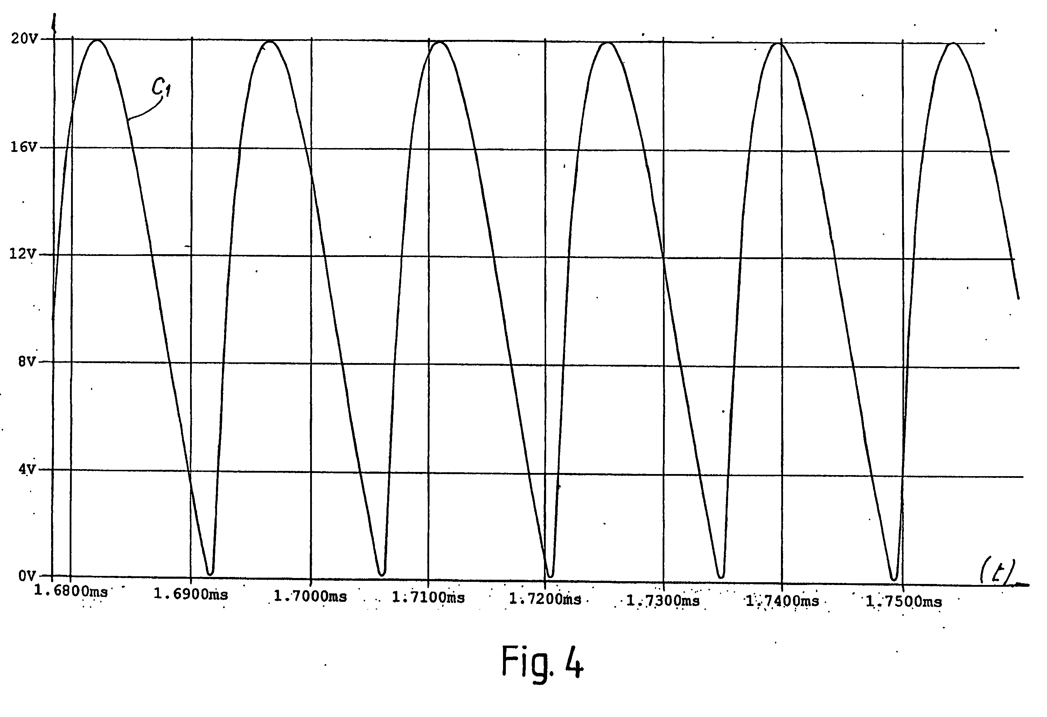

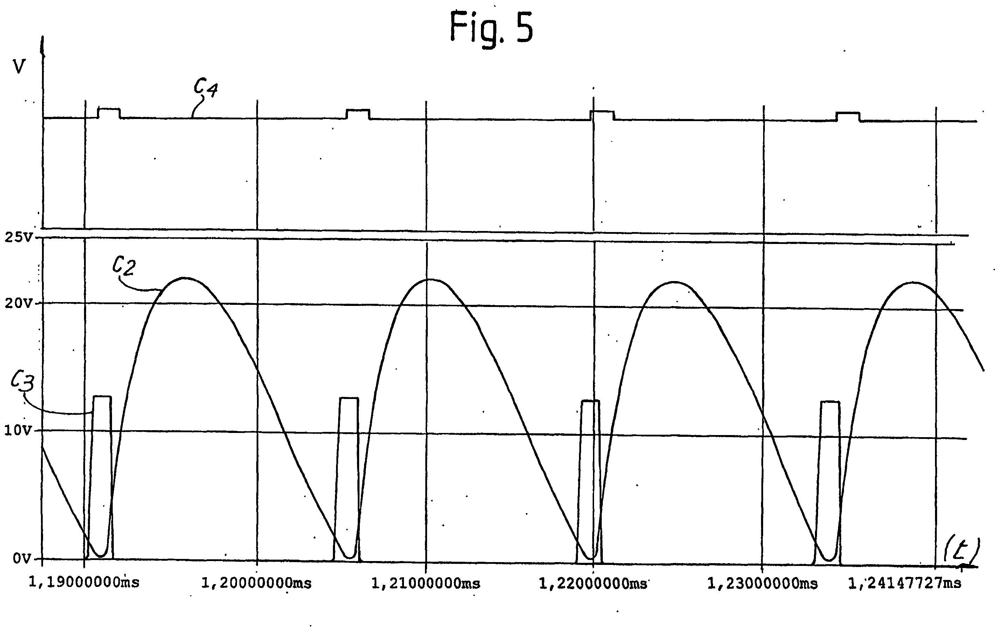

The operation of the synchronizing circuit described here is as follows. At the point X there is a rectified sinusoidal voltage represented by the curve $C_1$ in Fig. 4. A voltage with a similar variation is applied to the base of the transistor 51 (curve $C_2$ in Fig. 5). Whenever the voltage at the point X falls below a predetermined value, the transistor 51 is turned off, so that its collector changes from a voltage of approximately zero to a voltage equal to the battery voltage $V_{cc}$. In Fig. 5, the variation of the voltage on the collector of the transistor 51 is represented by the curve $C_3$.

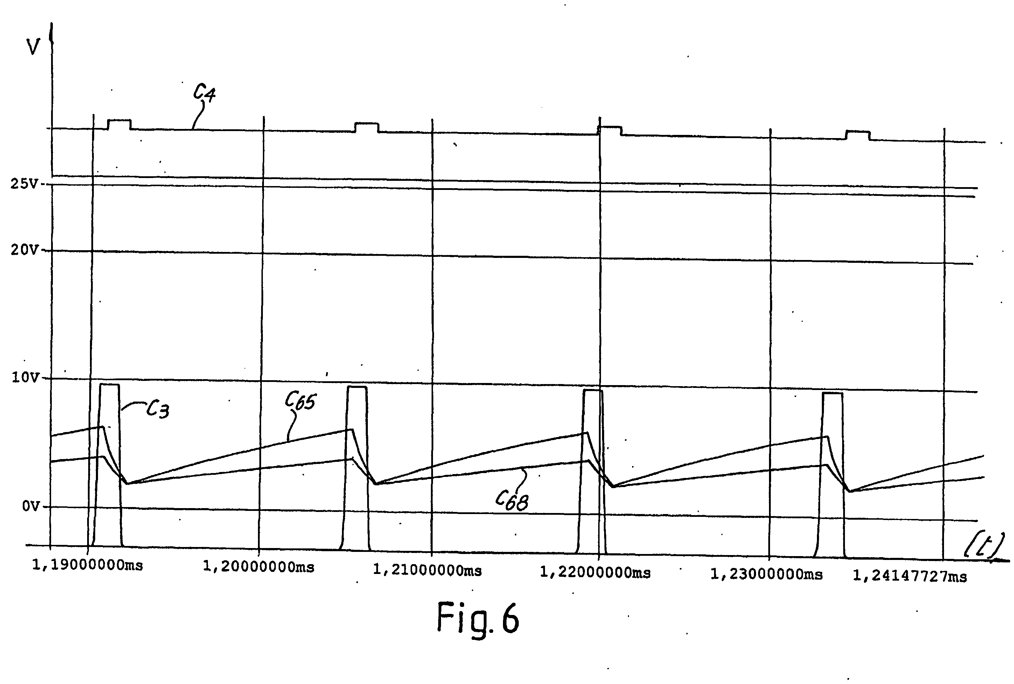

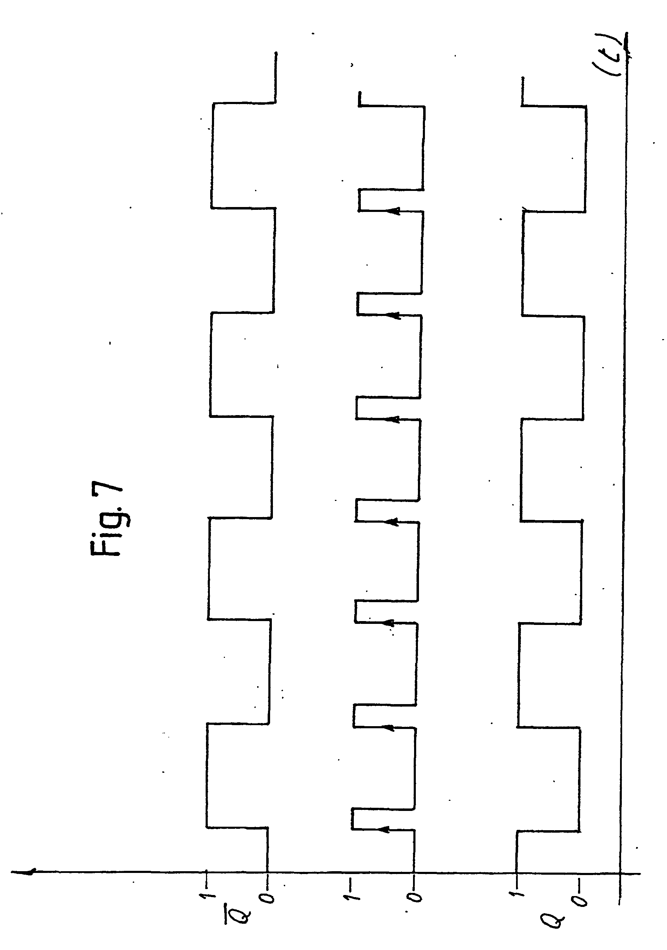

Consequently, a high signal, which is synchronized with the rectified sinusoidal voltage at the point X of the transformer of the inverter, and therefore with the resonant frequency of the inverter, appears at the input of the NAND gate 53 to which the collector of the transistor 51 is connected. This signal is used as the clock signal for the flip-flop 59. The outputs Q of the flip-flop 59 are inverted at each rising front of the clock signal, as shown in Fig. 7, to provide a duty cycle of 50%. The clock signal, determined by the collector voltage of the transistor 51, is indicated by the curve $C_4$ in Figs. 5 and 6.

The synchronizing circuit is made in such a way as to have two limit frequencies above and below which the inverter cannot be made to operate. These limit frequencies are determined by the resonant frequencies of the RC networks 63 and 66, where the former determines the maximum frequency and the second determines the minimum frequency. Because of the NAND gate 53, the synchronizing signal on the collector of the transistor 51 will be disregarded if a low signal is present at the input of said gate connected to the RC network 63. Similarly, the synchronizing signal will be disregarded if the signal at the input of the NAND gate 55, connected through the NOT gate 71 to the RC network 66, is low.

The connection of the output of the NOT gate 57 through the diodes 73 and 75 to the oscillators 63, 66 causes resetting, in other words the discharge of the capacitors, at each clock signal. Fig. 6 also shows the curves $C_3$ and $C_4$ and the variation of the voltage of the capacitors 65 and 68 (curves $C_{65}$ and $C_{68}$).

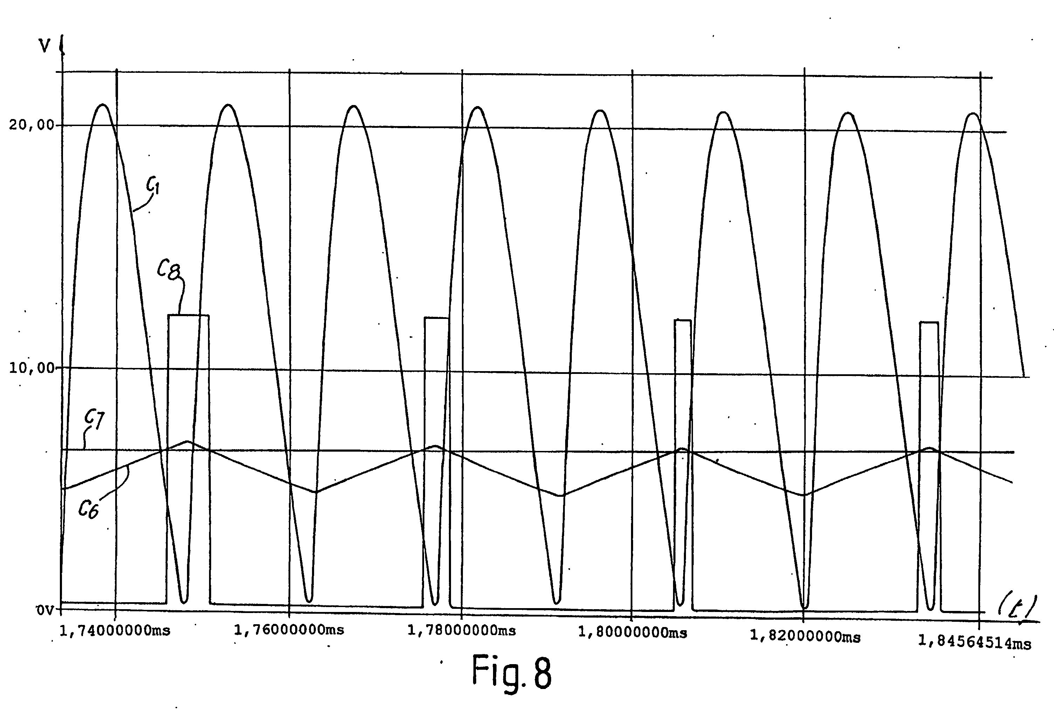

The current control circuit 11, enclosed within the frames 23A and 23B, comprises a resistor 81 through which a voltage signal, proportional to the current supplied by the battery 5, is obtained. The value of the resistor 81 is sufficiently low to make the losses across it practically negligible. The voltage present across the terminals of the resistor 81 is suitably filtered by an RC filter 82 and amplified by an amplifier 83 (Fig. 3B). The output of the amplifier 83 is connected to the positive input of an error amplifier 85, at whose negative input there is a reference voltage, equal to 2.5 V in this example, and which forms part of an integrator 87. The integrated error signal at the output of the integrator 87 is sent to the inverting input of a comparator 89, whose non-inverting input is connected to a branch comprising a resistor 91 and a capacitor 93 and is connected (at C) to one of the outputs of the flip-flop 59. Consequently, at the positive input of the comparator 89 there is a triangular-wave signal, represented by the curve $C_6$ in Fig. 8, where $C_1$ again represents the variation of the voltage at point X of the inverter. The curve $C_7$ represents the signal at the output of the integrator 87. Fig. 8 also shows the squarewave signal $C_8$ at the output of the comparator 89. This signal represents the control signal applied to the base of the controlled switch 47 to control the opening and closing of this switch.

The control system is such that the switch 47 is opened when the triangular wave $C_6$ takes a value greater than the value of the error signal (curve $C_7$), and to be reclosed when the triangular wave $C_6$ returns to a value of less than the value of the error signal.

As shown in Figs. 3A and 3B, the output of the comparator 89 is not connected directly to the base of the controlled switch 47, but to a first input of a NAND gate 95, whose output is connected (connection at point B) to the inputs of two NOT gates 97, whose outputs are connected to the base of the controlled switch 47. At the second input of the NAND gate 95 there may be an ON/OFF control signal, which causes the control of the controlled switch 47 to be temporarily disabled when the emergency inverter is first switched on, for a time interval which can be specified and during which the switch 47 always remains closed, regardless of the value of the discharge current of the battery.

Essentially, the operation of the controlled switch 47 controls the mean value of the current supplied by the battery 5 to the inverter 9, preventing this current from exceeding a maximum value $I_{max}$ determined by a suitable setting of the reference voltage applied to the negative input of the error amplifier 85. To ensure that the mean absorbed current does not fall below a minimum value, it is sufficient to provide a correct specification of the inverter, and particularly of the capacitor 41. The latter is specified in such a way that the current absorbed by the inverter with the minimum load (the lowest-powered lamp of those used) is equal to or slightly greater than the value $I_{max}$.

By maintaining the discharge current, in other words the current supplied by the battery in emergency operating conditions, constantly equal to the maximum value compatible with the reserve time required in the emergency device, considerable percentage increases in the BLF are obtained with respect to similar devices available on the market at present. In the following table, Column 1 shows the type of lamp used, Column 2 shows the values of BLF obtainable with a device according to the invention, and Column 3 shows the corresponding values of the BLF obtained with a type XW.3NC device made by Existalfte® (United Kingdom). Both devices are supplied from 14.4 V batteries.

| 1 | 2 | 3 |
|---|---|---|
| **type of lamp** | **BLF of the device according to the invention** | **BLF of the XW.3NC** |
| 14W T5 | 24.9% | 19% |
| 21W T5 | 19.3% | 17% |
| 28W T5 | 14.7% | 11% |
| 35W T5 | 12.1% | 7% |

The described circuit can also permit adaptation to different operating conditions; for example it can permit a modification of the guaranteed reserve time of the emergency unit. By suitable adjustment, it is possible to set a discharge current corresponding to the maximum permissible current for different lengths of battery life in emergency conditions. A first possibility of adaptation of the circuit is shown in Fig. 3A, where a second resistor 81' is connected in parallel with the resistor 81 and is indicated in broken lines to signify that this arrangement can be optional. The resistor 81' can be connected in parallel to the resistor 81 or isolated by a suitable contact, indicated schematically by 80. A change in the configuration of the resistance (81, or 81 in parallel with 81') modifies the value of the signal proportional to the discharge current which is supplied to the current control circuit 11.

Fig. 3C shows a detail of the control circuit 11, namely the amplifier 83 and the corresponding network. In this modified embodiment, one or two resistors 84, 84', connected to earth, can be connected the inverting input of the amplifier 83. The resistor 84' can be isolated by operating a jumper or switch 86. Thus the gain of the amplifier, and consequently the value of the output signal, can be modified. The configuration of Fig. 3D has an arrangement of two Zener diodes 88, 88' and a jumper or switch 90. The value of the reference voltage on the inverting input of the comparator 85 can be modified by closing or opening the switch 90.

Any one of the aforesaid configurations, or combinations thereof, can be used as a means of modifying the value at which the current control circuit 11 maintains the discharge current during emergency operation, in accordance with the minimum reserve time which the unit has to provide.

As mentioned above, the power supplied by the emergency battery 5 depends on the current and on the voltage. Therefore, in addition to the control of the current which ensures the supply of the maximum current compatible with the reserve time required from the battery, it is also possible to increase the light flux and therefore the BLF by increasing the battery voltage.

Conventional emergency devices are not capable of using batteries whose voltages differ from those for which the devices were designed, because of two factors.

In the first place, an increase in battery voltage causes an increase in the recharging time of the battery, with the result that a device having a battery charger designed to provide a specific recharging time for batteries of 12 V, for example, is not capable of charging a battery of higher voltage, for example 14.4 V, in the same time.

Secondly, the battery voltage decreases during discharge and the emergency operation of the device has to be interrupted when the voltage across the terminals of each cell forming the battery reaches the minimum voltage of 0.8 V. This minimum voltage corresponds to a voltage across the terminals of the battery which depends on the number of cells making up the battery. In emergency lighting devices of the conventional type, which use, for example, 12 V batteries consisting of ten cells (1.2 V per cell), the supply of current in emergency conditions is made to cease when the voltage across the terminals of the battery reaches the value of 8 V (called the "undervoltage") which corresponds to a voltage of 0.8 V per cell.

If a battery with a larger number of cells is used in a device of this type, it will continue to supply current even when the voltage of the individual cell falls below 0.8 V. When a twelve-cell (14.4 V) battery is used, for example, the undervoltage of 8 V is equivalent to a voltage of 0.67 V across the terminals of each individual cell. This is not.acceptable, since it causes irreversible damage to the battery.

In an improved embodiment of the invention, therefore, use is made of a battery charger which, on the one hand, enables the battery to be recharged in optimal conditions, regardless of the battery used, and, on the other hand, makes it possible to use batteries of different voltages (for example 12 and 14.4 V) without a risk of damage to the battery due to operation below the minimum permissible voltage for the individual cell.

With these arrangements it is possible to use the same device with different batteries, whereas at the present time it is necessary to design a different emergency lighting device for each type of battery.

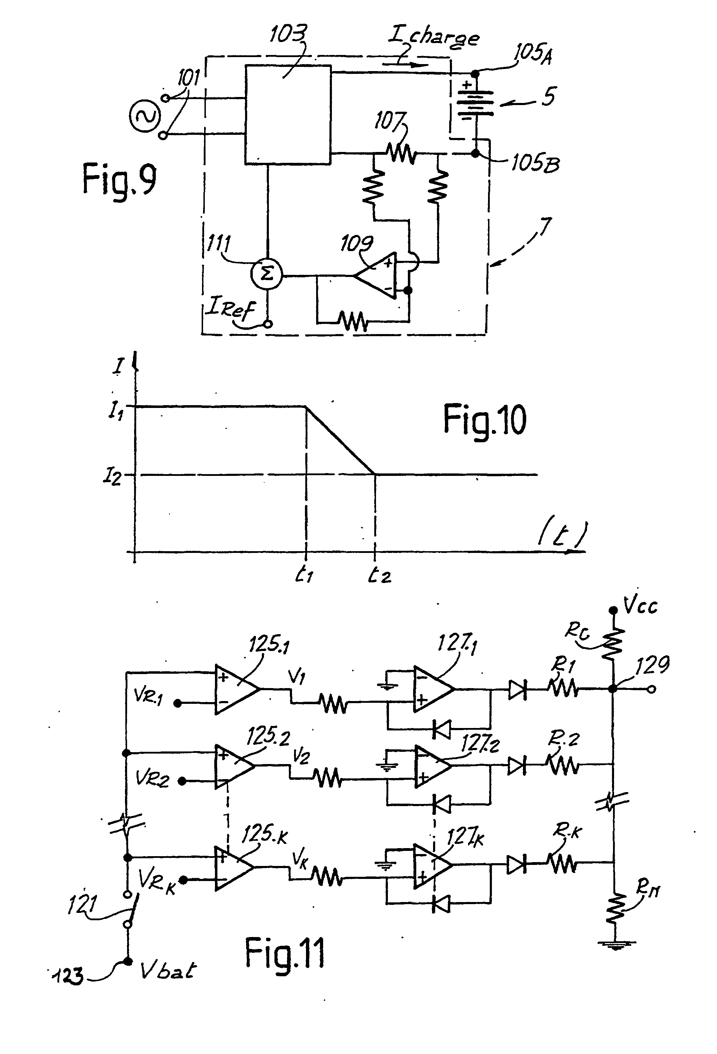

Fig. 9 shows a circuit for a battery charger capable of supplying a constant recharging current to the battery 5 independently of the voltage of the battery, in other words of the number of cells making up the battery. The battery charger comprises a connection 101 to the electrical mains, a switching power supply 103, a connection 105A, 105B to the battery 5, and a resistor 107 connected across the terminals of an operational amplifier 109. The output of the amplifier 109, on which there is a signal proportional to the current $I_{charge}$ which the power supply 103 supplies to the battery 5 during recharging, is compared by means of a comparator 111 with a reference signal $I_{ref}$.

The error signal generated by the comparator 111 is used as a feedback signal for controlling the switching power supply 103. The control is such that the current $I_{charge}$ is kept at a constant value over time.

For NiCd batteries, this value is typically 200 mA for batteries with a capacity of 4 Ah, and 100 mA for batteries with a capacity of 2 Ah.

The circuit of Fig. 9 can be improved to make it possible to use batteries of another type, for example metal-iodide nickel batteries. These batteries require a charging current which is not constant over time, but varies as illustrated in Fig. 10, in other words being equal to a value $I_1$ for a first charging period, typically of 16 hours, and then equal to a lower value $I_2$. To obtain this variation of the charging current it is simply necessary to modify, by means of a suitable timer, the value of the reference signal $I_{ref}$ at the input of the comparator 111.

To adapt the device to the use of batteries of different voltages, it is possible to provide for manual setting of the undervoltage, by means of jumpers, switches or other devices. In a particularly advantageous alternative embodiment, a circuit for automatic recognition of the voltage of the battery connected to the charger can be provided, to permit automatic setting of the undervoltage. An example of an embodiment of this circuit is shown in Fig. 11. It comprises a time delay switch 121 which is closed after a predetermined time interval, of the order of 30-60 s after the start of the discharge of the battery, in other words after the start of operation of the device in emergency lighting conditions.

This time interval is necessary because the battery voltage can be read only during the discharge of the battery, and at this stage it is also sufficiently independent of the temperature. In particular, for NiCd batteries the manufacturers state that there is a voltage of 1.3-1.35 V per cell after a discharge time of 30-60 s.

The switch 121 connects a terminal 123, at the battery voltage $V_{bat}$, to the non-inverting inputs of a set of K comparators 125.1-125.K, where

$$K = N_{max} - N_{min}$$

where

$N_{min}$ = minimum number of cells making up the battery
$N_{max}$ = maximum number of cells making up the battery

A reference voltage $V_{R1}$ - $V_{RK}$, where

$$V_{R1} > V_{R2} > ... > V_{RK}$$

is applied to the negative input of each comparator 125.1-125.K. The output voltage $V_1$-$V_K$ of each individual comparator is connected to the non-inverting output of a corresponding amplifier 127.1 - 127.K, whose inverting terminal is connected to earth. The outputs of the amplifiers 127.1 - 127.K are connected to corresponding resistors $R_1$ - $R_K$, where

$$R_1 < R_2 < ... < R_K$$

which, in turn, are connected to a node 129. This is connected through a resistor $R_C$ to the voltage $V_{bat}$ and through a resistor $R_N$ to earth.

In the circuit of Fig. 11, when the switch 121 is closed the generic output $V_i$ of the generic comparator 125.i goes to the high value and the corresponding resistor $R_i$ is connected in parallel with the resistor $R_c$. An increase in the value of the battery voltage (in other words an increase in the number of cells making up the battery) is accompanied by an increase in the number of outputs $V_1 ... V_K$ which go to the high value, and consequently an increase in the number of resistors $R_1 ... R_K$ connected in parallel with the resistor $R_C$.

The voltage in the node 129 is the undervoltage ($V_{undervoltage}$) which will be equal to

$$V_{undervoltage} = \frac{R_N}{R_N + R_{eq}} V_{cc}$$

where $V_{cc}$ is a reference voltage and

$$R_{eq} = \frac{1}{(1/R_1)+(1R_2)...+(1/R_i)+(1/R_c)}$$

where i is the number of outputs $V_1$ - $V_K$ brought to the high value, which depends on the battery voltage.

For example, if

$$V_{R1} = N_{max}{}^*V_{cell}-\varepsilon$$

$$V_{RK} = N_{min}{}^*V_{cell}-\varepsilon$$

where

$V_{cell}$ is the voltage across the terminals of the individual cell (typically 1.2-1.3 V),
$\varepsilon$ is the tolerance on the battery voltage:

- if the battery consists of $N_{min}$ cells, only the output $V_K$ will be at the high value and the remaining outputs will be at the low value;
- if the battery consists of $N_{min}$ + 1 cells, the outputs $V_K$, $V_{K-1}$ are at the high value, while the remaining outputs are at the low value and the resistance $R_c$ will be connected in parallel with two resistors $R_1$, $R_2$.

The final voltage at the node 129 will therefore depend on the number of cells making up the battery, and will be accepted as the minimum voltage (undervoltage) at which the emergency unit will interrupt the discharge current. This value is stored by means of the amplifiers 127.1-127.K which form corresponding latch or storage circuits, so that the value of the undervoltage is not modified during operation in emergency conditions, despite the fall in voltage across the terminals of the battery as a result of the gradual running down of the battery.

Other configurations for the battery voltage recognition circuit are possible. In general, this circuit will carry out a battery voltage reading operation consisting of the following stages:

- switching on the emergency unit;
- reading the battery voltage, after a wait time (approximately 30-60 s);
- setting the undervoltage;
- storing the undervoltage.

It is to be understood that the drawing shows only a possible embodiment of the invention, which can be varied in its forms and arrangements without departure from the scope as defined by the appended claims. The presence of any reference numbers in the attached claims does not limit the scope of protection of the claims, and has the sole purpose of facilitating the reading of the claims with reference to the preceding description and to the attached drawings.

**Claims**

1.  An emergency lighting unit comprising

    - a connection for a battery (5),
    - an inverter (9) for supplying from said battery (5), in emergency conditions, a lamp (L) connectable to said unit,

    a control circuit for controlling the current supplied by the battery to the inverter (9); **characterized in that** said control circuit comprises: a measuring system (81, 83) for measuring the current supplied by the battery to said inverter (9); comparison means (85, 87, 89) which compare the value measured by said measuring system with a value which can be selected, to generate a control signal (C8); a device (47) for regulating the current supplied by the battery to said inverter according to the control signal, such that said current is maintained at a predetermined value ($I_{max}$) independently of the characteristics of the lamp (L) connected to said inverter.

2.  The unit as claimed in claim 1, **characterized in that** said regulating device (47) comprises a controlled switch, and **in that** the control signal ($C_8$) controls said controlled switch, thus causing it to open and close.

3.  The unit as claimed in claim 2, **characterized in that** said controlled switch (47) is associated with means (45, 49) which maintain a supply of current to the inverter during the intervals in which said controlled switch (47) is open.

4.  The unit as claimed in claim 3, **characterized in that** said means which maintain the supply to the inverter during the intervals of opening of said controlled switch (47) comprise an inductance (45) and a diode (49) connected in parallel with the battery (5).

5.  The unit as claimed in one or more of the preceding claims, **characterized in that** said inverter (9) is a push-pull inverter.

6.  The unit as claimed in claim 5, **characterized in that** said inverter is a current-sourcing push-pull parallel-resonance inverter.

7.  The unit as claimed in one or more of the preceding claims, **characterized in that** said measuring system comprises a resistor (81), through which the supply to the inverter (9) is restored, and an amplifier (83).

8.  The unit as claimed in one or more of the preceding claims, **characterized in that** said means of comparison comprise an integrator (87), which compares the signal from the measuring system with a reference signal, thus generating a difference signal, and integrates said difference signal to obtain an error signal.

9.  The unit as claimed in claim 8, **characterized in that** said means of comparison comprise a comparator (89) which compares the error signal with a period signal whose frequency is equal to the frequency of the control signal of the inverter (9).

10. The unit as claimed in claim 9, **characterized in that** said periodic signal is a triangular-wave signal produced by the integration of the control signal of the inverter (9).

11. The unit as claimed in one or more of the preceding claims, **characterized in that** said inverter (9) is designed to draw the maximum current ($I_{max}$) from the battery when it is connected to the lamp (L) of lowest power usable with said unit.

12. The unit as claimed in one or more of the preceding claims, **characterized in that** said inverter comprises a synchronizing circuit (9A) for generating an inverter control signal at a frequency equal to the resonant frequency of the inverter, independently of the lamp supplied by said inverter.

**13.** The unit as claimed in claim 12, **characterized in that** said synchronizing circuit (9A) comprises an electronic switch (51) whose switching is controlled in accordance with the voltage at one point of the inverter.

**14.** The unit as claimed in claim 12 or 13, **characterized in that** said synchronizing circuit comprises a flip-flop (59).

**15.** The unit as claimed in claim 13 or 14, **characterized in that** said point is the center of the primary winding of a transformer with a central tap.

**16.** The unit as claimed in claim 13, 14 or 15, **characterized in that** said electronic switch is a transistor (51), whose collector voltage is used for generating a clock signal for synchronizing the inverter control signal with the resonant frequency of the inverter.

**17.** The unit as claimed in claim 16, **characterized in that** said clock signal controls said flip-flop (59).

**18.** The unit as claimed in claim 14 or 15, **characterized in that** said synchronizing circuit (9A) comprises an arrangement of logic gates (53, 55, 71) in cascade for generating a clock signal for synchronizing the inverter control signal with the resonant frequency of the inverter.

**19.** The unit as claimed in claim 16 or 17, **characterized in that** said synchronizing circuit comprises an arrangement of logic gates (53, 55, 71) in cascade, of which the first logic gate (53) receives at its input a signal proportional to the voltage on the collector of said transistor (51).

**20.** The unit as claimed in claim 18 or 19, **characterized in that** said synchronizing circuit comprises two oscillators (63, 66) with oscillation frequencies corresponding, respectively, to the maximum permissible value and to the minimum permissible value of the resonant frequency for said inverter, and **in that** said oscillators are connected to said logic gates in such a way that the clock signal is disregarded if its frequency is greater than the maximum permissible value of the resonant frequency or less than the minimum permissible value of the resonant frequency.

**21.** The unit as claimed in claim 20, **characterized in that** said oscillators (63, 66) comprise corresponding RC networks, each comprising a corresponding capacitor (65, 68).

**22.** The unit as claimed in claim 21, **characterized in that** said synchronizing circuit comprises an inverting gate (57) which receives said clock signal at its input and whose output is connected through a dissipating element (77) and corresponding diodes (73, 75) to said RC networks to cause the capacitors to be reset at each pulse of the clock signal.

**23.** The unit as claimed in one or more of the preceding claims, **characterized in that** it comprises a battery charger.

**24.** The unit as claimed in one or more of the preceding claims, **characterized in that** it has means for modifying the value ($I_{max}$) at which said current control circuit maintains the mean current supplied by said battery.

**25.** An emergency lighting device, comprising, in combination, a connection to a power supply line, a ballast for supplying at least one discharge lamp from the voltage supplied by said line, and an emergency unit according to one or more of the preceding claims.

**26.** A method for supplying a discharge lamp in emergency conditions by means of an emergency battery (5), in which said lamp (L) is supplied by said battery through an inverter (9), **characterized in that** the value of the current supplied by said battery (5) is measured and the supply conditions of said inverter are controlled maintaining the current supplied at a mean value which is essentially equal to a maximum value ($I_{max}$) determined by the capacity of the battery and at which the battery provides a guaranteed predetermined emergency operating time, independently of the features of the lamp supplied by said inverter.

**Patentansprüche**

**1.** Notlichteinheit, umfassend

- einen Anschluß für eine Batterie (5),

- einen Inverter (9) für die Stromversorgung von der Batterie (5) zu einer mit der Einheit verbindbaren Lampe (L) in Notsituationen, eine Steuerschaltung zum Steuern des von der Batterie zum Inverter (9) gelieferten Stromes;

    **dadurch gekennzeichnet, dass** die Steuerschaltung umfasst: ein Meßsystem (81,83) zum Messen des von der Batterie zu dem Inverter (9) gelieferten Stromes; Vergleichsmittel (85,87,89), die den von dem Meßsystem gemessenen Wert mit einem wählbaren Wert vergleichen, um ein Steuersignal (C8) zu erzeugen; eine Einrichtung (47) zum Regulieren des von der Batterie zu dem Inverter gelieferten Stroms entsprechend dem Steuersignal derart, dass der Strom auf einem vorgegebenen Wert ($I_{max}$) gehalten wird, unabhängig von den Eigenschaften der mit dem Inverter verbundenen Lampe (L).

2. Einheit nach Anspruch 1, **dadurch gekennzeichnet, dass** die Reguliereinrichtung (47) einen gesteuerten Schalter aufweist und dass das Steuersignal (C8) den gesteuerten Schalter steuert, so dass er öffnet und schließt.

3. Einheit nach Anspruch 2, **dadurch gekennzeichnet, dass** dem gesteuerten Schalter (47) Mittel (45,49) zugeordnet sind, die eine Stromzufuhr zu dem Inverter während der Zeitintervalle aufrechterhalten, in denen der gesteuerte Schalter (47) offen ist.

4. Einheit nach Anspruch 3, **dadurch gekennzeichnet, dass** die Mittel, die die Stromzufuhr zu dem Inverter während der Öffnungsintervalle des gesteuerten Schalters (47) aufrechterhalten, eine Induktivität (45) und eine Diode (49) umfassen, die parallel zu der Batterie (5) geschaltet sind.

5. Einheit nach einem oder mehreren der vorangehenden Ansprüche, **dadurch gekennzeichnet, dass** der Inverter (9) ein Push-Pull-Inverter ist.

6. Einheit nach Anspruch 5, **dadurch gekennzeichnet, dass** der Inverter ein als Stromquelle dienender Push-Pull-Inverter mit Parallelresonanz ist.

7. Einheit nach einem oder mehreren der vorangehenden Ansprüche, **dadurch gekennzeichnet, dass** das Meßsystem einen Widerstand (81), durch den die Stromzufuhr zu dem Inverter (9) wiederhergestellt wird, und einen Verstärker (83) aufweist.

8. Einheit nach einem oder mehreren der vorangehenden Ansprüche, **dadurch gekennzeichnet, dass** die Vergleichsmittel einen Integrator (87) aufweisen, der das Signal von dem Meßsystem mit einem Referenzsignal vergleicht, und dadurch ein Differenzsignal erzeugt, und das Differenzsignal integriert, um ein Fehlersignal zu erhalten.

9. Einheit nach Anspruch 8, **dadurch gekennzeichnet, dass** die Vergleichsmittel einen Vergleicher (89) umfassen, der das Fehlersignal mit einem periodischen Signal vergleicht, dessen Frequenz gleich der Frequenz des Steuersignals des Inverters (9) ist.

10. Einheit nach Anspruch 9, **dadurch gekennzeichnet, dass** das periodische Signal ein Dreiecks-Wellensignal ist, das durch die Integration des Steuersignals des Inverters (9) erzeugt wird.

11. Einheit nach einem oder mehreren der vorangehenden Ansprüche, **dadurch gekennzeichnet, dass** der Inverter (9) so ausgebildet ist, dass er den maximalen Strom ($I_{max}$) von der Batterie abzicht, wenn er mit der Lampe (L) der niedrigsten Leistung, die mit der Einheit verwendbar ist, verbunden ist.

12. Einheit nach einem oder mehreren der vorangehenden Ansprüche, **dadurch gekennzeichnet, dass** der Inverter eine Synchronisierschaltung (9A) aufweist zur Erzeugung eines Invertersteuersignals bei einer Frequenz, die gleich der Resonanzfrequenz des Inverters ist, unabhängig von der von dem Inverter stromversorgten Lampe.

13. Einheit nach Anspruch 12, **dadurch gekennzeichnet, dass** die Synchronisierschaltung (9A) einen elektronischen Schalter (51) aufweist, dessen Schaltvorgang entsprechend der Spannung an einem Punkt des Inverters gesteuert wird.

14. Einheit nach Anspruch 12 oder 3, **dadurch gekennzeichnet, dass** die Synchronisierschaltung einen Flip-Flop (59) aufweist.

**15.** Einheit nach Anspruch 13 oder 14, **dadurch gekennzeichnet, dass** der Punkt der Mittelpunkt der Primärwicklung eines Transformators mit Mittelabgnff ist.

**16.** Einheit nach Anspruch 13, 14 oder 15, **dadurch gekennzeichnet, dass** der elektronische Schalter ein Transistor (51) ist, dessen Kollektorspannung zur Erzeugung eines Taktsignals zum Synchronisieren des Invertersteuersignals mit der Resonanzfrequenz des Inverters dient.

**17.** Einheit nach Anspruch 16, **dadurch gekennzeichnet, dass** das Taktsignal den Flip-Flop (59) steuert.

**18.** Einheit nach Anspruch 14 oder 15, **dadurch gekennzeichnet, dass** die Synchronisierschaltung (9A) eine Kaskadenanordnung von Logikgattem (53,55,71) zum Erzeugen eines Taktsignals zum Synchronisieren des Invertersteuersignals mit der Resonanzfrequenz des Inverters aufweist.

**19.** Einheit nach Anspruch 16 oder 17, **dadurch gekennzeichnet, dass** die Synchronisierschaltung eine Kaskadenanordnung von Logikgattern (53,55,71) aufweist, bei der das erste Logikgatter (53) an seinem Eingang ein Signal empfängt, welches proportional zu der Spannung am Kollektor des Transistors (51) ist.

**20.** Einheit nach Anspruch 18 oder 19, **dadurch gekennzeichnet, dass** die Synchronisierschaltung zwei Oszillatoren (63,66) aufweist, deren Oszillationsfrequenzen dem zulässigen Maximalwert bzw. dem zulässigen Minimalwert der Resonanzfrequenz für den Inverter entsprechen, und dass die Oszillatoren mit den Logikgattern derart verbunden sind, dass das Taktsignal unberücksichtigt bleibt, wenn seine Frequenz größer als der zulässige Maximalwert der Resonanzfrequenz oder kleiner als der zulässige Minimalwert der Resonanzfrequenz ist.

**21.** Einheit nach Anspruch 20, **dadurch gekennzeichnet, dass** die Oszillatoren (63,66) jeweils RC-Glieder aufweisen, von denen jedes einen jeweiligen Kondensator (65,68) enthält.

**22.** Einheit nach Anspruch 21, **dadurch gekennzeichnet, dass** die Synchronisierschaltung ein Invertergate (57) aufweist, welches an seinem Eingang das Taktsignal empfängt und dessen Ausgang über ein Energie verzehrendes Element (77) und entsprechende Dioden (73,75) mit den RC-Gliedern verbunden ist, um die Rücksetzung der Kondensatoren bei jedem Impuls des Taktsignals zu bewirken.

**23.** Einheit nach einem oder mehreren der vorangehenden Ansprüche, **dadurch gekennzeichnet, dass** sie ein Batterieladegrät enthält.

**24.** Einheit nach einem oder mehreren der vorangehenden Ansprüche, **dadurch gekennzeichnet, dass** sie Mittel zum Verändern des Wertes ($I_{max}$) aufweist, bei dem der von der Batterie gelieferte mittlere Strom von der Stromsteuerschaltung gehalten wird.

**25.** Notbeleuchtungsvorrichtung, enthaltend in Kombination den Anschluß zu einer Stromversorgungsleitung, einen Ballast zur Stromversorgung mindestens einer Entladungslampe von der durch die Leitung gelieferten Spannung, und eine Noteinheit gemäß einem oder mehreren der vorangehenden Ansprüche.

**26.** Verfahren zur Stromversorgung einer Entladungslampe in Notsituationen mittels einer Notbatterie (5), bei der die Lampe (L) von der Batterie über einen Inverter (9) stromversorgt wird, **dadurch gekennzeichnet, dass** der Wert des von der Batterie (5) gelieferten Stromes gemessen und die Stromversorgungsbedingungen des Inverters so gesteuert werden, dass der zugeführte Strom auf einem Mittelwert gehalten wird, der im wesentlichen gleich einem Maximalwert ($I_{max}$) ist, der von der Kapazität der Batterie bestimmt wird, und bei dem die Batterie eine garantierte vorgegebene Notbetriebsdauer liefert, unabhängig von den Eigenschaften der von dem Inverter stromversorgten Lampe.

**Revendications**

**1.** Bloc d'éclairage de sécurité comprenant :

- une connexion pour une batterie (5),
- un onduleur (9) pour alimenter, à partir de ladite batterie (5), dans des conditions exceptionnelles, une lampe (L) pouvant être connectée audit bloc, un circuit de commande pour commander le courant délivré par la batterie à l'onduleur (9) ;

**caractérisé en ce que** ledit circuit de commande comprend : un système de mesure (81, 83) pour mesurer le courant délivré par la batterie audit onduleur (9) ; des moyens de comparaison (85, 87, 89) qui comparent la valeur mesurée par ledit système de mesure avec une valeur qui peut être sélectionnée, pour générer un signal de commande (C8) ; un dispositif (47) pour réguler le courant délivré par la batterie audit onduleur conformément au signal de commande, de sorte que ledit courant soit maintenu à une valeur prédéterminée ($I_{max}$) indépendamment des caractéristiques de la lampe (L) connectée audit onduleur.

2. Bloc selon la revendication 1, **caractérisé en ce que** ledit dispositif de régulation (47) comprend un commutateur commandé, et **en ce que** le signal de commande (C8) commande ledit commutateur commandé, l'amenant ainsi à s'ouvrir et se fermer.

3. Bloc selon la revendication 2, **caractérisé en ce que** ledit commutateur commandé (47) est associé à des moyens (45, 49) qui maintiennent une alimentation en courant de l'onduleur pendant les intervalles dans lesquels ledit commutateur commandé (47) est ouvert.

4. Bloc selon la revendication 3, **caractérisé en ce que** lesdits moyens qui maintiennent l'alimentation de l'onduleur pendant les intervalles d'ouverture dudit commutateur commandé (47) comprennent une inductance (45) et une diode (49) connectées en parallèle avec la batterie (5).

5. Bloc selon une ou plusieurs des revendications précédentes, **caractérisé en ce que** ledit onduleur (9) est un onduleur push-pull.

6. Bloc selon la revendication 5, **caractérisé en ce que** ledit onduleur est un onduleur à résonance parallèle push-pull à source de courant.

7. Bloc selon une ou plusieurs des revendications précédentes, **caractérisé en ce que** ledit système de mesure comprend une résistance (81), par l'intermédiaire de laquelle l'alimentation de l'onduleur (9) est rétablie, et un amplificateur (83).

8. Bloc selon une ou plusieurs des revendications précédentes, **caractérisé en ce que** lesdits moyens de comparaison comprennent un intégrateur (87) qui compare le signal provenant du système de mesure avec un signal de référence, générant ainsi un signal de différence, et qui intègre ledit signal de différence afin d'obtenir un signal d'erreur.

9. Bloc selon la revendication 8, **caractérisé en ce que** lesdits moyens de comparaison comprennent un comparateur (89) qui compare le signal d'erreur avec un signal périodique dont la fréquence est égale à la fréquence du signal de commande de l'onduleur (9).

10. Bloc selon la revendication 9, **caractérisé en ce que** ledit signal périodique est un signal à onde triangulaire produit par l'intégration du signal de commande de l'onduleur (9).

11. Bloc selon une ou plusieurs des revendications précédentes, **caractérisé en ce que** ledit onduleur (9) est conçu pour prélever le courant maximum ($I_{max}$) de la batterie lorsqu'il est connecté à la lampe (L) de la plus faible puissance utilisable par ledit bloc.

12. Bloc selon une ou plusieurs des revendications précédentes, **caractérisé en ce que** ledit onduleur comprend un circuit de synchronisation (9A) pour générer un signal de commande d'onduleur à une fréquence égale à la fréquence de résonance de l'onduleur, indépendamment de la lampe alimentée par ledit onduleur.

13. Bloc selon la revendication 12, **caractérisé en ce que** ledit circuit de synchronisation (9A) comprend un commutateur électronique (51) dont la commutation est commandée conformément à la tension en un point de l'onduleur.

14. Bloc selon la revendication 12 ou 13, **caractérisé en ce que** ledit circuit de synchronisation comprend une bascule bistable (59).

15. Bloc selon la revendication 13 ou 14, **caractérisé en ce que** ledit point est le centre de l'enroulement primaire d'un transformateur avec un point milieu.

16. Bloc selon la revendication 13, 14 ou 15, **caractérisé en ce que** ledit commutateur électronique est un transistor (51) dont la tension de collecteur est utilisée pour générer un signal d'horloge pour synchroniser le signal de commande d'onduleur avec la fréquence de résonance de l'onduleur.

17. Bloc selon la revendication 16, **caractérisé en ce que** ledit signal d'horloge commande ladite bascule bistable (59).

18. Bloc selon la revendication 14 ou 15, **caractérisé en ce que** ledit circuit de synchronisation (9A) comprend un agencement de portes logiques (53, 55, 71) en cascade pour générer un signal d'horloge pour synchroniser le signal de commande d'onduleur avec la fréquence de résonance de l'onduleur.

19. Bloc selon la revendication 16 ou 17, **caractérisé en ce que** ledit circuit de synchronisation comprend un agencement de portes logiques (53, 55, 71) en cascade dont la première porte logique (53) reçoit, à son entrée, un signal proportionnel à la tension sur le collecteur dudit transistor (51).

20. Bloc selon la revendication 18 ou 19, **caractérisé en ce que** ledit circuit de synchronisation comprend deux oscillateurs (63, 66) avec des fréquences d'oscillation correspondant, respectivement, à la valeur maximum autorisée et à la valeur minimum autorisée de la fréquence de résonance pour ledit onduleur, et **en ce que** lesdits oscillateurs sont connectés auxdites portes logiques de manière à ce que le signal d'horloge soit ignoré si sa fréquence est supérieure à la valeur maximum autorisée de la fréquence de résonance ou inférieure à la valeur minimum autorisée de la fréquence de résonance.

21. Bloc selon la revendication 20, **caractérisé en ce que** lesdits oscillateurs (63, 66) comprennent des réseaux RC correspondants comprenant chacun un condensateur (65, 68) correspondant.

22. Bloc selon la revendication 21, **caractérisé en ce que** ledit circuit de synchronisation comprend une porte inverseuse (57) qui reçoit ledit signal d'horloge à son entrée et dont la sortie est connectée, par l'intermédiaire d'un élément de dissipation (77) et des diodes (73, 75) correspondantes, auxdits réseaux RC pour provoquer la réinitialisation des condensateurs à chaque impulsion du signal d'horloge.

23. Bloc selon une ou plusieurs des revendications précédentes, **caractérisé en ce qu'**il comprend un chargeur de batterie.

24. Bloc selon une ou plusieurs des revendications précédentes, **caractérisé en ce qu'**il comporte des moyens pour modifier la valeur ($I_{max}$) à laquelle ledit circuit de commande de courant maintient le courant moyen délivré par ladite batterie.

25. Dispositif d'éclairage de sécurité, comprenant, en combinaison, une connexion à une ligne d'alimentation, un ballast pour alimenter au moins une lampe à décharge à partir de la tension délivrée par ladite ligne, et un bloc de sécurité selon une ou plusieurs des revendications précédentes.

26. Procédé pour alimenter une lampe à décharge dans des conditions exceptionnelles au moyen d'une batterie de secours (5), dans lequel ladite lampe (L) est alimentée par ladite batterie par l'intermédiaire d'un onduleur (9), **caractérisé en ce que** la valeur du courant délivré par ladite batterie (5) est mesurée et les conditions d'alimentation dudit onduleur sont commandées en maintenant le courant délivré à une valeur moyenne qui est essentiellement égale à une valeur maximum ($I_{max}$) déterminée par la capacité de la batterie et à laquelle la batterie assure un temps de fonctionnement de secours prédéterminé garanti, indépendamment des caractéristiques de la lampe alimentée par ledit onduleur.

Fig. 1

Fig. 2

Fig. 3A

Fig. 3B

Fig.3c

Fig. 3D

Fig.A

Fig. 4

EP 1 202 428 B1

## Fig. 5

EP 1 202 428 B1

Fig.6

20

Fig.7

Fig. 8

EP 1 202 428 B1

Fig.9

Fig.10

Fig.11